(19) **Europäisches Patentamt European Patent Office Office européen des brevets**

(11) **EP 4 493 893 B1**

(12) **FASCICULE DE BREVET EUROPEEN**

(45) Date de publication et mention de la délivrance du brevet:
**17.09.2025 Bulletin 2025/38**

(21) Numéro de dépôt: **23711055.6**

(22) Date de dépôt: **14.03.2023**

(51) Classification Internationale des Brevets (IPC):
*G01F 1/002* (2022.01)   *G01F 1/7086* (2022.01)
*G01F 23/292* (2006.01)   *G01P 5/00* (2006.01)
*G01S 17/86* (2020.01)   *G06T 7/20* (2017.01)
*G01S 7/00* (2006.01)   *G01S 17/88* (2006.01)
*G01P 5/26* (2006.01)

(52) Classification Coopérative des Brevets (CPC):
**G01F 1/002; G01F 1/7086; G01F 23/2928; G01P 5/26; G01S 7/003; G01S 17/86; G01S 17/88**

(86) Numéro de dépôt international:
**PCT/EP2023/056442**

(87) Numéro de publication internationale:
**WO 2023/174922 (21.09.2023 Gazette 2023/38)**

(54) **PROCÉDÉ ET STATION DE SURVEILLANCE HYDROLOGIQUE D'UN COURS D'EAU**

VERFAHREN UND STATION ZUR HYDROLOGISCHEN ÜBERWACHUNG EINES WASSERLAUFS

METHOD AND STATION FOR HYDROLOGICAL SURVEILLANCE OF A WATERCOURSE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.03.2022 FR 2202284**

(43) Date de publication de la demande:
**22.01.2025 Bulletin 2025/04**

(73) Titulaire: **Vortex.IO**
**31400 Toulouse (FR)**

(72) Inventeurs:
 • **POISSON, Jean-Christophe**
   **31450 DEYME (FR)**
 • **VALLADEAU, Guillaume**
   **31400 TOULOUSE (FR)**

(74) Mandataire: **Bringer IP**
   **9, Avenue Parmentier**
   **31200 Toulouse (FR)**

(56) Documents cités:
   **CN-A- 106 092 061     CN-A- 112 215 903**
   **CN-A- 113 804 917**

 • **WAGHMARE AMIT ET AL: "Water velocity measurement using contact and Non-contact type sensor", 2015 COMMUNICATION, CONTROL AND INTELLIGENT SYSTEMS (CCIS), IEEE, 7 November 2015 (2015-11-07), pages 334 - 338, XP032885422, DOI: 10.1109/ CCINTELS.2015.7437935**

## Description

## Domaine technique de l'invention

L'invention concerne un procédé et une station de surveillance hydrologique d'un cours d'eau, c'est-à-dire un procédé et une station configurés pour déterminer de manière automatique des paramètres de suivi d'un cours d'eau.

## Arrière-plan technologique

La situation de changement climatique que le monde est en train de connaitre s'accompagne d'un nombre croissant de crises hydrologiques (inondations, sécheresses, submersions côtières, etc.) dont les conséquences, souvent dramatiques pour les populations, résultent en partie d'un manque de connaissance, de surveillance et de suivi des plans d'eau environnants.

Dans tout le texte, on désigne par les termes « plans d'eau » ou « cours d'eau », toute masse d'eau, statique ou dynamique susceptible de connaitre des variations de hauteur, de vitesse et/ou de débit en fonction des conditions climatiques. A ce titre, la terminologie de « plan d'eau » ou « cours d'eau » au sens de l'invention désigne indifféremment les rivières, les ruisseaux, les fleuves, les mers, les lacs, les étangs, les mares, les bassins d'eau vive ou stagnante, etc.

Il existe d'ores et déjà des solutions pour surveiller l'évolution de cours d'eau. Par exemple, le document de brevet CA2961702 décrit un système et un procédé de mesure des paramètres hydro acoustiques d'un cours d'eau mettant en œuvre des modules à effet Doppler associés à des systèmes d'imagerie montés sur des satellites d'observations. Cet ensemble complexe d'équipements permet de déterminer la vitesse du cours d'eau, sa profondeur, etc.

L'un des inconvénients de cette solution est le cout d'installation et d'opération qui est peu compatible avec la surveillance de la plupart des cours d'eau.

Il existe également des solutions mettant en œuvre des capteurs immergés, tels que des vélocimètres. Ces solutions présentent l'inconvénient d'être peu stables et peu durables dans le temps.

Il existe aussi des méthodes connues sous l'acronyme anglais LSPIV pour *« Large Scale Particle Image Velocimetry »* qui permettent de réaliser des mesures non intrusives de la vitesse d'un cours d'eau à partir d'images numériques fournies par une caméra d'acquisition d'images agencée au voisinage du cours d'eau. L'un des inconvénients de ces techniques est qu'il est nécessaire de disposer d'au moins quatre points de repère connus dans l'image pour permettre une correspondance entre un point de l'image (défini par ses coordonnées en pixels) et un point de l'espace environnant (défini par sa longitude, latitude et altitude). En outre, il est nécessaire d'ortho-rectifier les images pour compenser la visée oblique de la caméra d'acquisition d'images puis de redimensionner chacun des pixels à partir des points de référence connus. CN112215903-A décrit un dispositif de détection de la vitesse d'écoulement d'une rivière avec une caméra pour photographier une rivière pour obtenir une première image et une seconde image et un module de détermination, configuré pour déterminer la vitesse de déplacement d'un pixel cible dans l'image cible sur la base de la première image et de la seconde image et un module de calcul pour calculer la vitesse d'écoulement de la rivière sur la base entre autres de la vitesse de déplacement du pixel cible.

En d'autres termes, ces méthodes sont efficaces mais imposent la prise de points GPS dans le champ de vu de la caméra, ce qui présente plusieurs inconvénients parmi lesquels l'accès aux berges qui peut être difficile (en outre, la présence d'un opérateur équipé d'une canne GPS ou d'un moyen équivalent est nécessaire pour la calibration) ; la nécessité de disposer de points GPS qui restent toujours visibles dans le champs de vue (une montée d'eau peut rendre les points GPS connus inutilisables) ; une fiabilité faible pour les cours d'eau peu dynamiques (le calcul de vitesse repose sur l'observation d'une structure qui se déplace d'une image à l'autre qui s'avère peu efficace pour les plans d'eau calmes) ; etc.

Les inventeurs ont cherché à développer un procédé et une station hydrologique qui permettent de pallier au moins certains des inconvénients des solutions connues. En particulier, les inventeurs ont cherché à proposer un procédé et une station hydrologique qui permettent la surveillance des cours d'eau par l'utilisation de moyens simples, économiques, faciles à installer et dont la maintenance est aisée.

## Objectifs de l'invention

L'invention vise à fournir une station de surveillance hydrologique qui permette de mesurer la hauteur du cours d'eau et la vitesse de surveillance du cours d'eau surveillée par l'utilisation de moyens simples et peu couteux.

L'invention vise en particulier à fournir une telle station de surveillance qui ne nécessite pas de disposer de points de référence GPS connus.

L'invention vise aussi à fournir, dans au moins un mode de réalisation, une station de surveillance hydrologique d'un cours d'eau qui puisse être installée au voisinage du cours d'eau surveillée sans difficultés particulières par un opérateur sans qualifications particulières.

L'invention vise aussi à fournir, dans au moins un mode de réalisation, une telle station de surveillance qui peut être déployée rapidement sur un grand nombre de cours d'eau et qui permet par exemple d'instrumenter les 13 000 cours d'eau contributeurs au risque d'inondation en France.

L'invention vise aussi à fournir, dans au moins un mode de réalisation, une station de surveillance hydrologique qui puisse être installée au voisinage du cours d'eau surveillé pendant une longue durée, sans nécessiter une maintenance régulière.

L'invention vise aussi à fournir, dans au moins un mode de réalisation, une station de surveillance hydrologique qui présente une gestion optimisée de l'énergie.

L'invention vise aussi à fournir un procédé de surveillance hydrologique qui présente les mêmes avantages que la station hydrologique selon l'invention.

**Exposé de l'invention**

Pour ce faire, l'invention concerne une station hydrologique de surveillance d'un cours d'eau comprenant :

- un boitier équipé de moyens de fixation à un ouvrage surplombant le cours d'eau à surveiller, tel qu'un pont,
- un lidar logé dans ledit boitier et orienté verticalement vers le cours d'eau à surveiller, une fois le boitier fixé audit ouvrage, de manière à pouvoir effectuer une mesure de distance entre le cours d'eau à surveiller et ladite station,
- une caméra numérique logée dans ledit boitier et orientée verticalement vers le cours d'eau à surveiller, une fois le boiter fixé audit ouvrage, de manière à pouvoir faire l'acquisition d'images du cours d'eau à surveiller,

- une unité de traitement logée dans ledit boitier et configurée pour pouvoir déterminer la hauteur d'eau à l'aplomb de l'ouvrage sur lequel ladite station est fixée et la vitesse de surface dudit cours d'eau, à partir de ladite mesure de distance fournie par ledit lidar, desdites images acquises par ladite caméra, et des caractéristiques optiques de ladite caméra,
- des moyens de communication sans fil à un serveur distant des données de surveillance élaborées par ladite unité de traitement à partir de ladite hauteur d'eau et de ladite vitesse de surface calculée,
- une batterie rechargeable, logée dans ledit boitier de manière à pouvoir alimenter en électricité ladite unité de traitement, ledit lidar, ladite caméra et lesdits moyens de communication sans fil.

La station de surveillance hydrologique selon l'invention permet donc d'acquérir des mesures de hauteur d'eau et des images de la surface du cours d'eau surveillé sans interaction physique avec la surface de l'eau, de traiter ces données à bord de la station pour en déduire des informations de surveillance qui sont ensuite envoyées à un serveur distant, ce dernier pouvant être configuré pour notifier (directement ou indirectement) un utilisateur des mesures effectuées par la station.

Cet utilisateur peut être de tout type et dépend des applications utilisant les données fournies par la station hydrologique selon l'invention. Diverses utilisations sont possibles. Par exemple et à titre non limitatif, la station hydrologique peut être utilisée pour les applications suivantes :

- alerter la population environnante du cours d'eau de l'imminence d'un danger (par exemple une inondation) lié au cours d'eau,
- surveiller et détecter des étiages et sécheresses,
- gérer des ressources en eau (niveau d'eau des bassins, etc.)
- piloter des ouvrages hydrauliques (ouverture/fermeture de vannes en fonction de la hauteur d'eau détectée d'un bassin par exemple),
- valider et calibrer des mesures satellitaires,
- gérer le trafic ferroviaire sur des ouvrages d'art susceptibles d'être inondés (blocage du trafic lorsqu'un pont est proche de son niveau de débordement),
- etc.

La station de surveillance hydrologique de l'invention peut être fixée sur un ouvrage d'art, tel qu'un point, par l'intermédiaire de moyens de fixation associés à un boitier enfermant les différents capteurs (lidar, caméra d'acquisition d'images) et les équipements électroniques (unité de commande, moyens de communication, batterie rechargeable).

La station de surveillance hydrologique selon l'invention combine l'utilisation d'un lidar et d'une caméra d'acquisition d'images pour calculer la hauteur d'eau et la vitesse de surface.

L'une des particularités innovantes de la station selon l'invention est d'utiliser un lidar, non seulement pour mesurer la hauteur de la surface d'eau, mais également pour permettre la détermination de la vitesse de surface. En particulier, selon l'invention, le lidar et la caméra d'acquisitions d'images coopèrent l'un avec l'autre pour permettre de résoudre les inconvénients des solutions LSPIV de l'art antérieur, liés notamment à la nécessité de disposer de points de référence.

La station hydrologique selon l'invention permet ainsi de déterminer le champ de vitesses de surface du cours d'eau à partir d'une série de prises de vues de la caméra et de mesures de hauteur du lidar. Aucun point de référence n'est nécessaire, ce qui facilite grandement la mise en œuvre et l'installation d'une station selon l'invention.

La station hydrologique selon l'invention est une solution financièrement abordable (pas de moyens techniques complexes à mettre en œuvre) et flexible (installation, utilisation, maintenance) pour surveiller tous types de cours d'eau, ouvrant la voie à une surveillance généralisée de l'ensemble des cours d'eau d'une région, d'un, pays et/ou d'un continent.

Avantageusement et selon l'invention, ladite unité de traitement comprend :

- un module de calcul du champ de vision v observé sur l'eau par ladite caméra, exprimé en mètres, à partir de la taille t du capteur de ladite caméra, de la focale *f* de ladite caméra, et de la distance *d* mesurée par ledit lidar suivant la formule

[Math 1]

$$v = \frac{t}{f} \cdot d,$$

- un module de calcul de la vitesse de surface *vit* du cours d'eau à surveiller, exprimée en pixels par seconde, à partir desdites images acquises par ladite caméra,
- un module de conversion de la vitesse de surface du cours d'eau en mètres par seconde à partir de ladite vitesse *vit* calculée par ledit module de calcul de vitesse et du champ de vision v calculée par ledit module de calcul du champ de vision.

Selon cette variante avantageuse de l'invention, l'unité de traitement est configurée pour calculer la vitesse de surface du cours d'eau en mètres par seconde à partir des images acquises par la caméra et par les informations de hauteur fournies par le lidar.

Pour ce faire, le premier module (dit de calcul du champ de vision) utilise la mesure de hauteur fournie par le lidar pour calculer le champ de vision v de la caméra exprimé en mètres selon l'équation indiquée.

Le deuxième module (dit de calcul de la vitesse de surface) traite les images fournies par la caméra pour calculer la vitesse de surface exprimée en pixels par seconde. Ce module met avantageusement en œuvre un algorithme de flux optique qui correspond au mouvement apparent des objets, surfaces, contours et arrêtes d'une scène visuelle causé par le déplacement relatif entre la caméra fixe de la station et la scène formée du cours d'eau qui s'écoule sous la caméra.

L'algorithme de flux optique cherche à minimiser une fonction d'énergie qui correspond à résoudre l'équation suivante :

[Math 2]

$$\frac{dI}{dx}u + \frac{dI}{dy}v + \frac{dI}{dt} = 0$$

où *I* représente l'intensité d'un pixel dans l'image, *dI/dx* est le gradient de l'image selon l'axe *x*, *dI/dy* est le gradient de l'image selon l'axe *y*, *dI/dt* est le gradient de l'image en fonction du temps, u et v représentent les vitesses dans le plan horizontal selon les axes respectifs x et *y*.

Dans cette équation, l'hypothèse est faite que chaque point physique de l'image (et non chaque pixel) conserve son intensité au cours de son mouvement durant un court laps de temps lors de la capture vidéo.

Pour résoudre cette équation à deux inconnues, il convient de faire une hypothèse supplémentaire.

Selon l'invention, cette hypothèse supplémentaire est double et consiste à considérer que deux images consécutives acquises par la caméra ne sont séparées que d'un court laps de temps et que les objets ne se sont pas déplacés de manière significative au cours de ce court laps de temps. En effet, les vitesses de surface des cours d'eau surveillés excèdent rarement les 10 mètres par seconde, soit un déplacement de 33 cm entre des images acquises à une fréquence de 30 images par seconde.

L'algorithme de Farnebäck permet de matérialiser cette hypothèse supplémentaire en considérant pour chaque pixel de l'image, une fenêtre de NxN pixels qui forme le voisinage du pixel considéré et l'hypothèse est faite que l'ensemble des pixels de cette fenêtre subit le même déplacement que le pixel considéré.

L'équation de flux optique est ensuite appliquée à chacun des pixels de la fenêtre et une approximation polynomiale est à faire pour chaque fenêtre, ce qui permet de résoudre l'équation de flux optique et de connaitre la vitesse de surface exprimée en pixels par seconde.

Le troisième module (dit de module de conversion) permet de calculer la vitesse de surface du cours d'eau en mètres par seconde à partir de ladite vitesse *vit* calculée par le module de calcul de vitesse et du champ de vision v calculée par ledit module de calcul du champ de vision.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit)* ou un circuit logique programmable (plus connue sous l'acronyme FPGA pour la dénomination anglaise *Field-Programmable Gate Array*) ou un circuit de microprocesseurs spécialisés (plus connue sous l'acronyme DSP pour la dénomination anglaise *Digital Signal Processor*) ou tout matériel équivalent ou toute combinaison des matériels précités. D'une manière générale, un module est donc un élément (logiciel et/ou matériel) qui permet d'assurer une fonction, en l'occurrence de calculer une valeur de sortie à partir de données d'entrée.

Avantageusement et selon l'invention, la station comprend au moins deux modes de fonctionnement parmi lesquels :

- un mode de fonctionnement, dit de routine, dans lequel lesdites mesures de hauteur d'eau et de vitesse de surface sont calculées et envoyées audit serveur distant à une première fréquence prédéterminée,

- un mode de fonctionnement, dit intensif, dans lequel lesdites mesures de hauteur d'eau et de vitesse de surface sont calculées et envoyées audit serveur distant à une seconde fréquence prédéterminée, supérieure à ladite première fréquence prédéterminée.

Selon cette variante avantageuse, la station optimise sa consommation d'énergie électrique en prévoyant au moins deux modes de fonctionnement parmi lesquels un mode routine et un mode intensif. Le mode routine correspond par exemple à un envoi par heure de la moyenne (ou de la médiane) de 30 secondes de mesure des données de surveillance et le mode routine correspond par exemple à un envoi toutes les 5/10/15 minutes (au choix de l'utilisateur) des données de mesure.

Avantageusement et selon cette variante, la station bascule du mode de routine au mode intensif dès que ladite hauteur d'eau et/ou la vitesse de surface mesurées dépasse une valeur prédéterminée.

Cette variante avantageuse permet d'intensifier la surveillance dès qu'un seuil de vigilance critique est atteint, ce qui permet d'alerter l'utilisateur de l'imminence d'une situation critique (par exemple alerter les populations en temps quasi réel de l'imminence d'une inondation). Ce seuil de vigilance est paramétré par l'utilisateur en fonction des conditions du cours d'eau surveillé et de la réactivité visée.

Avantageusement et selon l'invention, la station comprend en outre un panneau solaire reliée à ladite batterie rechargeable de manière à pouvoir l'alimenter en énergie électrique.

Cette variante avantageuse permet de rendre la station autonome en énergie et de ne dépendre que de l'énergie solaire pour son fonctionnement.

Avantageusement et selon l'invention, lesdits moyens de fixation du boitier à un ouvrage sont amovibles de manière à pouvoir dissocier ladite station dudit ouvrage en cas de maintenance.

Cet aspect particulier de l'invention permet simplement de fixer ou désolidariser la station de l'ouvrage sur lequel elle est montée. A noter que si aucun ouvrage d'art n'est disponible au-dessus du cours d'eau surveillé, la station selon l'invention peut également, par le biais des moyens de fixation amovible, être fixée sur une autre structure comprenant un bras permettant de déporter la station au-dessus du cours d'eau à surveiller.

Avantageusement et selon l'invention, lesdits moyens de fixation amovible comprennent des moyens aimantés de manière à permettre la fixation de ladite station sur un ouvrage à structure métallique.

Cet aspect est particulièrement avantageux pour fixer la station sur un pont métallique par exemple. Les moyens de fixation amovible peuvent alors comprendre un aimant néodyme dont la puissance est déterminée par rapport au poids de la station.

L'invention concerne également un système de surveillance hydrologique d'un cours d'eau comprenant :

- une pluralité de stations hydrologiques selon l'invention fixées sur des ouvrages surplombant le cours d'eau à surveiller,
- un serveur de réception et de traitement des données de surveillance élaborées par chaque unité de traitement de chaque station hydrologique,
- un module de notification configuré pour émettre un signal de notification à destination d'un dispositif externe dès que ledit serveur détermine une hauteur d'eau et/ou une vitesse supérieure ou inférieure à un seuil prédéterminé nécessitant une prise de décision d'un utilisateur.

Le système de surveillance comprend un module de notification (aussi désigné par le terme « alerte » dans le texte) permettant de notifier (directement ou indirectement) un utilisateur des mesures issues de la station hydrologique. Cet utilisateur peut alors prendre des décisions qui dépendent de son cas d'usage du système.

A titre d'exemple non limitatif, ce module de notification vise à permettre à l'utilisateur de réaliser les actions suivantes:

- alerter la population environnante du cours d'eau de l'imminence d'un danger (par exemple une inondation) lié au cours d'eau,
- surveiller et détecter des étiages et sécheresses,
- gérer des ressources en eau (niveau d'eau des bassins, etc.)
- piloter des ouvrages hydrauliques (ouverture/fermeture de vannes en fonction de la hauteur d'eau détectée d'un bassin par exemple),
- valider et calibrer des mesures satellitaires,
- gérer le trafic ferroviaire sur des ouvrages d'art susceptibles d'être inondés (blocage du trafic lorsqu'un pont est proche de son niveau de débordement),
- etc.

Le système de surveillance selon l'invention permet de surveiller un ou plusieurs cours d'eau simultanément, chaque cours d'eau étant équipé d'une ou plusieurs stations de surveillance. Les données de surveillance issues de plusieurs stations d'un cours d'eau peuvent être combinées pour fournir une indication de la dynamique de l'évolution.

Les avantages et effets techniques de la station hydrologique selon l'invention s'appliquent *mutatis mutandis* au système de surveillance selon l'invention.

L'invention concerne également un procédé de surveillance hydrologique d'un cours d'eau comprenant les étapes suivantes :

- mesurer au moyen d'un lidar la distance, selon une direction verticale, qui sépare un boitier logeant ce lidar et ce cours d'eau, ledit boitier étant fixé sur un ouvrage surplombant ledit cours d'eau,

- acquérir au moyen d'une caméra numérique logée dans ledit boitier et orientée verticalement vers le cours d'eau à surveiller, des images dudit cours d'eau,
- déterminer la hauteur d'eau à l'aplomb de l'ouvrage sur lequel le boitier est fixé et la vitesse de surface dudit cours d'eau, à partir de ladite mesure de distance fournie par ledit lidar, desdites images acquises par ladite caméra, et des caractéristiques optiques de ladite caméra,
- transmettre à un serveur distant des données de surveillance élaborées à partir de ladite hauteur d'eau et de ladite vitesse de surface calculée.

Un procédé selon l'invention met avantageusement en œuvre une station selon l'invention et une station selon l'invention est avantageusement mise en œuvre par un procédé selon l'invention.

Les avantages et effets techniques de la station hydrologique selon l'invention s'appliquent *mutatis mutandis* au procédé de surveillance selon l'invention.

Avantageusement et selon l'invention, ladite étape consistant à déterminer la hauteur et la vitesse du cours d'eau comprend :

- un calcul du champ de vision v observé sur l'eau par ladite caméra, exprimé en mètres, à partir de la taille t du capteur de ladite caméra, de la focale *f* de ladite caméra, et de la distance *d* mesurée par ledit lidar suivant la formule

[Math 1]

$$v = \frac{t}{f} . d,$$

- un calcul de la vitesse de surface *vit* du cours d'eau à surveiller, exprimée en pixels par seconde, à partir desdites images acquises par ladite caméra,
- une conversion de la vitesse de surface du cours d'eau en mètres par seconde à partir de ladite vitesse *vit* calculée et du champ de vision v calculée.

Avantageusement et selon l'invention, le calcul de la vitesse de surface *vit* du cours d'eau à surveiller met en œuvre l'algorithme de Farnebäck.

L'invention concerne également une station hydrologique de surveillance, un système de surveillance et un procédé de surveillance caractérisés en combinaison par tout ou partie des caractéristiques mentionnées ci-dessus ou ci-après.

**Liste des figures**

D'autres buts, caractéristiques et avantages de l'invention apparaîtront à la lecture de la description suivante donnée à titre uniquement non limitatif et qui se réfère aux figures annexées dans lesquelles :

[Fig. 1] est une vue schématique en perspective d'une station de surveillance hydrologique selon un mode de réalisation de l'invention montée sur un pont surplombant un cours d'eau surveillé par la station.
[Fig. 2] est une vue schématique en perspective d'une station de surveillance hydrologique selon un mode de réalisation.
[Fig. 3] est une vue schématique fonctionnelle d'une station de surveillance hydrologique selon un mode de réalisation de l'invention.

**Description détaillée d'un mode de réalisation de l'invention**

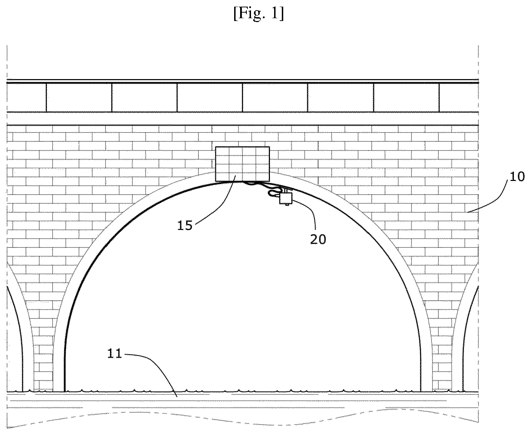

Sur les figures, les échelles et les proportions ne sont pas strictement respectées et ce, à des fins d'illustration et de clarté. Dans toute la description détaillée qui suit en référence aux figures, sauf indication contraire, chaque élément de la station de surveillance hydrologique est décrit tel qu'il est agencé lorsque la station est fixée sous un pont à l'aplomb d'un cours d'eau à surveiller. Cette configuration est notamment représentée sur la figure 1.

En outre, les éléments identiques, similaires ou analogues sont désignés par les mêmes références dans toutes les figures.

La figure 1 illustre un pont 10 qui enjambe un cours d'eau 11. Une station hydrologique 20 selon un mode de réalisation de l'invention est fixée sous une arche du pont 10. La station hydrologique 20 est fixée sous le pont 10 de telle sorte que les équipements de mesure embarqués dans la station (et décrits ultérieurement) puissent avoir une visée verticale et perpendiculaire à la surface du cours d'eau 11. Une tolérance de quelques degrés (par exemple 1,5 degrés) est néanmoins permise sans remettre en cause les mesures effectuées par la station hydrologique. La station hydrologique 20 selon le mode de réalisation de la figure 1 est alimentée en énergie électrique par l'intermédiaire d'un panneau solaire 15 fixé sur le pont et relié à une batterie rechargeable logée dans la station hydrologique.

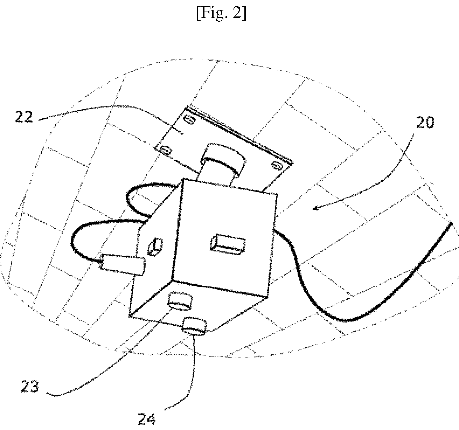

La figure 2 illustre de manière plus détaillée la station hydrologique 20 selon un mode de réalisation de l'invention.

La station hydrologique comprend un boitier 21 et une plaque de fixation 22 qui porte le boitier 21 par l'intermédiaire d'un bras monté sur une liaison rotule permettant l'orientation du boitier par rapport au cours d'eau. Le boitier selon le mode de réalisation de l'invention présente des dimensions de 160x80x85 mm. Il est réalisé en un matériau compatible avec une installation en extérieur, tel que par du PVC. Bien entendu, rien n'empêche d'utiliser un boitier réalisé en un autre matériau et présentant d'autres dimensions.

La plaque de fixation 22 est pourvue d'orifice permettant le passage de vis de fixation de la plaque au pont. Bien entendu, d'autres moyens de fixation sont possibles dans la portée des revendications.

Selon un mode de réalisation, la plaque de fixation est métallique et le boitier porte un aimant permettant sa fixation à la plaque métallique par aimantation.

Le boitier 21 loge un lidar 23 et une caméra 24 d'acquisition d'images du cours d'eau 11. Le lidar et la caméra sont fixés dans le boitier de telle sorte que leurs objectifs émergent du boitier pour pointer vers le cours d'eau 11.

Le lidar 23 peut-être de tous types connus. A titre d'exemple et selon un mode de réalisation, il s'agit d'un lidar infrarouge présentant une portée de 20m et une précision d'1cm à 1Hz. La fréquence d'envoi des impulsions est par exemple de 7Hz. Bien entendu, d'autres types de lidar présentant d'autres caractéristiques techniques peuvent être utilisés sans remettre en cause le principe de l'invention.

La caméra 24 d'acquisitions d'images est selon un mode de réalisation de l'invention une caméra équipée d'un capteur infrarouge de 8 mégapixels. Bien entendu, d'autres types de caméra présentant d'autres caractéristiques techniques peuvent être utilisées sans remettre en cause le principe de l'invention.

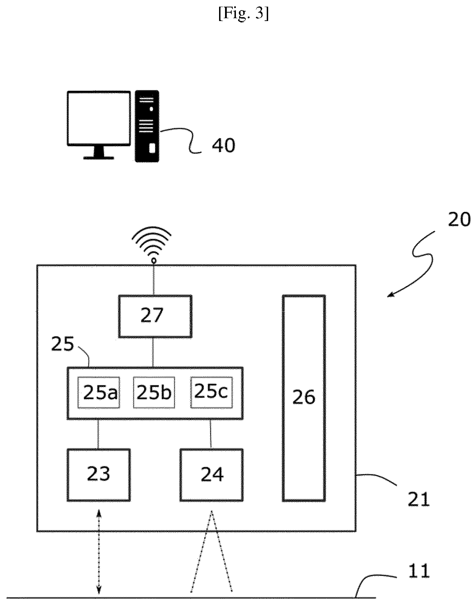

Tel que représenté schématiquement sur la figure 3, le boitier enferme également une unité de traitement 25 configurée pour pouvoir déterminer la hauteur d'eau et la vitesse de surface du cours d'eau, à partir de la mesure de hauteur fournie par le lidar 23, des images acquises par la caméra 24, et des caractéristiques optiques de la caméra 24, notamment sa focale et la taille du capteur. Le principe du traitement opéré par l'unité de traitement 25 est décrit ultérieurement.

Le boitier enferme également des moyens de communication sans fil 27 qui comprennent par exemple une puce 4G/5G et une antenne d'émission/réception. Ces moyens de communication 27 sont destinés principalement à émettre les données de surveillance à destination d'un serveur distant 40.

Enfin, le boitier comprend une batterie rechargeable 26 reliée d'une part au panneau solaire 15 (non représenté sur la figure 3) et d'autre part aux différents éléments de la station (lidar, caméra, unité de traitement, moyens de communication).

L'unité de traitement 25 comprend selon un mode de réalisation de l'invention un module de calcul 25a du champ de vision v observé sur l'eau par la caméra 24, un module de calcul 25b de la vitesse de surface du cours d'eau exprimée en pixels par seconde et un module de conversion 25c de la vitesse de surface du cours d'eau en mètres par seconde à partir de la vitesse calculée par le module 25b.

Comme indiqué précédemment, chaque module peut être formé d'un élément logiciel, d'un sous-ensemble d'un programme logiciel, d'un élément matériel, ou d'une combinaison d'un élément matériel et d'un sous-programme logiciel.

Le module 25a calcule le champ de vision v observé sur l'eau par la caméra 24, exprimé en mètres, à partir de la taille *t* du capteur, de la focale *f,* et de la distance *d* mesurée par le lidar suivant la formule

$$v = \frac{t}{f} . d$$ .

Le module 25b met en œuvre le principe du flux optique dense et l'algorithme de Farnebäck à partir des images acquises par la caméra 24.

Comme indiqué précédemment, le principe du flux optique vise à minimiser une fonction d'énergie qui correspond à résoudre l'équation suivante :

[Math 2]

$$\frac{dI}{dx}u + \frac{dI}{dy}v + \frac{dI}{dt} = 0$$

où *I* représente l'intensité d'un pixel dans l'image, *dI/dx* est le gradient de l'image selon l'axe *x, dI/dy* est le gradient de l'image selon l'axe *y, dI/dt* est le gradient de l'image en fonction du temps, u et v représentent les vitesses dans le plan horizontal selon les axes respectifs *x* et *y.*

L'algorithme de Farnebäck part de l'hypothèse que deux images consécutives dans une vidéo ne sont séparées que d'un laps de temps *dt* faible et que les objets ne se sont pas déplacés de manière significative pendant ce laps de temps.

Ainsi, pour chaque pixel de l'image, une fenêtre de NxN pixels est considérée et il est fait l'hypothèse que tous les pixels de cette fenêtre ont subi le même déplacement. Cependant, comme cette fenêtre est considérée pour chaque pixel de l'image, plusieurs pixels ont des parties de fenêtre de voisinage communes.

L'équation du flux optique est appliquée à chacun des pixels de la fenêtre puis une approximation polynomiale est faite pour chaque fenêtre. Le polynôme est de la forme quadratique suivante :

[Math 3]

$$f(x) = x^T A x + b^T x + c$$

où *A* est une matrice symétrique, *b* un vecteur, c un scalaire, et *x* est la position de chaque pixel donné dans un repère local à la fenêtre de voisinage.

Les coefficients de ce polynôme sont déterminés à l'aide d'un estimateur aux moindres carrés assorti d'une pondération. Ainsi, en observant comment le polynôme se transforme sous l'effet de la translation (mouvement), on définit une méthode pour estimer les champs de déplacement à partir des coefficients d'expansion du polynôme. Après une série de raffinements, le flux optique est calculé.

Une particularité intéressante de l'algorithme de Farnebäck réside dans la génération d'une pyramide d'images, où chaque niveau a une résolution inferieure à celle du niveau précédent. Lorsque l'on sélectionne un niveau de pyramide supérieur à 1, l'algorithme peut suivre les points à plusieurs niveaux de résolution, en commençant par le niveau le plus bas. L'augmentation du nombre de niveaux de pyramide permet à l'algorithme de gérer des déplacements plus importants entre les images.

Les images sont traitées deux à deux. Par exemple, si on considère des séquences vidéo de 5 secondes acquises à une fréquence de 30 images par seconde, on obtient 150 images à traiter 2 à 2. Les 149 matrices de vitesse de surface obtenues par l'algorithme sont moyennées pour fournir un champ de vitesse moyen sur les 5 secondes de vidéo. La mesure de distance par le lidar est réalisée juste avant l'acquisition des images, par exemple pendant les 30 secondes qui précèdent l'acquisition de la séquence vidéo.

Le module de conversion 25c calcule la vitesse de surface du cours d'eau en mètres par seconde à partir de ladite vitesse calculée en pixels par seconde par le module 25b et du champ de vision v calculée par le module 25a. La taille d'un pixel au sol est obtenue en divisant le champ de vue calculé par le nombre de pixels de l'image selon la dimension choisie.

La visée de la caméra étant verticale, aucune correction de perspective n'est nécessaire. Une simple correction de déformation due à la lentille peut être appliquée aux images.

La station selon l'invention comprend également un module de gestion de l'énergie (non représenté sur la figure 3). Ce module est configuré pour basculer la station d'un premier mode de fonctionnement, dit de routine, dans lequel les mesures de hauteur d'eau et de vitesse de surface sont calculées et envoyées au serveur distant 40 à une première fréquence prédéterminée (par exemple un envoi par heure) vers un deuxième mode de fonctionnement, dit intensif, dans lequel les mesures de hauteur d'eau et de vitesse de surface sont calculées et envoyées au serveur distant 40 à une seconde fréquence prédéterminée (par exemple 1 envoi toutes les 5 minutes). Ce module de gestion de l'énergie récupère donc les informations de mesure de hauteur d'eau et de vitesse de surface calculées par l'unité de traitement 25.

Le basculement du mode de routine au mode intensif est effectué dès que la hauteur d'eau et/ou la vitesse de surface mesurées dépasse une valeur prédéterminée qui dépend du cours d'eau surveillé. Il peut par exemple s'agir d'une hauteur d'eau correspondant à un pourcentage de sa hauteur de débordement, ce pourcentage dépendant du cours d'eau et/ou de l'application visée.

La station hydrologique met avantageusement en œuvre le procédé de surveillance selon l'invention qui comprend l'ensemble des étapes suivantes.

Dans une première étape, on mesure au moyen d'un lidar la distance, selon une direction verticale, qui sépare le boitier logeant le lidar et le cours d'eau.

Dans une deuxième étape, on fait l'acquisition d'images du cours d'eau au moyen de la caméra 24.

Dans une troisième étape, on détermine la hauteur d'eau à l'aplomb de l'ouvrage sur lequel le boitier est fixé et la vitesse de surface du cours d'eau.

Dans une quatrième étape, on transmet à un serveur distant 40 les données de surveillance calculées par la station de surveillance.

L'invention s'étend également à un système de surveillance hydrologique d'un cours d'eau comprenant une pluralité de stations hydrologiques selon l'invention surplombant un ou plusieurs cours d'eau à surveiller, un serveur de réception et de traitement des données de surveillance élaborées par chaque unité de traitement de chaque station hydrologique, et un module de notification configuré pour émettre un signal à destination d'un dispositif externe (par exemple un téléphone portable) dès que le serveur détermine une hauteur d'eau et/ou une vitesse supérieure ou inférieure à un seuil prédéterminé.

L'invention est donc une solution nouvelle, innovante, simple et efficace de gestion des événements hydrologiques.

**Revendications**

1. Station hydrologique de surveillance (20) d'un cours d'eau (11) comprenant :

   - un boitier (21) équipé de moyens de fixation (22) à un ouvrage surplombant le cours d'eau à surveiller, tel qu'un pont,
   - un lidar (23) logé dans ledit boitier et orienté verticalement vers le cours d'eau (11) à surveiller, une fois le boitier (21) fixé audit ouvrage, de manière à pouvoir effectuer une mesure de distance entre le cours d'eau à surveiller et ladite station,
   - une caméra numérique (24) logée dans ledit boitier (21) et orientée verticalement vers le cours d'eau (11) à surveiller, une fois le boiter fixé audit ouvrage, de manière à pouvoir faire l'acquisition d'images du cours d'eau à surveiller,
   - une unité de traitement (25) logée dans ledit boitier (21) et configurée pour pouvoir déterminer la hauteur d'eau à l'aplomb de l'ouvrage sur lequel ladite station est fixée et la vitesse de surface dudit cours d'eau, à partir de ladite mesure de distance fournie par ledit lidar (23), desdites images acquises par ladite caméra (24), et des caractéristiques optiques de ladite caméra,
   - des moyens de communication sans fil (27) à un serveur distant (40) des données de surveillance élaborées par ladite unité de traitement (25) à partir de ladite hauteur d'eau et de ladite vitesse de surface calculée,
- une batterie rechargeable (26), logée dans ledit boitier (21) de manière à pouvoir alimenter en électricité ladite unité de traitement, ledit lidar ladite caméra et lesdits moyens de communication sans fil.

2. Station selon la revendication 1, **caractérisée en ce que** ladite unité de traitement (25) comprend :

   - un module de calcul du champ de vision (25a) v observé sur l'eau par ladite caméra (24), exprimé en mètres, à partir de la taille t du capteur de ladite caméra, de la focale *f* de ladite caméra, et de la distance *d* mesurée par ledit lidar suivant la formule $v = \dfrac{t}{f}.d$,

   - un module de calcul de la vitesse de surface (25b) *vit* du cours d'eau à surveiller, exprimée en pixels par seconde, à partir desdites images acquises par ladite caméra,
   - un module de conversion (25c) de la vitesse de surface du cours d'eau en mètres par seconde à partir de ladite vitesse *vit* calculée par ledit module de calcul de vitesse et du champ de vision v calculée par ledit module de calcul du champ de vision.

3. Station selon la revendication 2, **caractérisée en ce que** ledit module de calcul de la vitesse de surface (25b) *vit* du cours d'eau à surveiller met en œuvre l'algorithme de Farnebäck.

4. Station selon l'une des revendications 1 à 3, **caractérisée en ce qu'**elle comprend au moins deux modes de fonctionnement parmi lesquels :

   - un mode de fonctionnement, dit de routine, dans lequel lesdites mesures de hauteur d'eau et de vitesse de surface sont calculées et envoyées audit serveur distant à une première fréquence prédéterminée,
   - un mode de fonctionnement, dit intensif, dans lequel lesdites mesures de hauteur d'eau et de vitesse de surface sont calculées et envoyées audit serveur distant à une seconde fréquence prédéterminée, supérieure à ladite première fréquence prédéterminée.

5. Station selon la revendication 4, **caractérisée en ce qu'**elle bascule du mode de routine au mode intensif dès que ladite hauteur d'eau et/ou la vitesse de surface mesurées dépasse une valeur prédéterminée.

6. Station selon l'une des revendications 1 à 5, **carac-** **térisé en ce qu'**elle comprend en outre un panneau solaire (15) reliée à ladite batterie rechargeable (26) de manière à pouvoir l'alimenter en énergie électrique.

7. Station selon l'une des revendications 1 à 6, **caractérisée en ce que** lesdits moyens de fixation (22) du boitier à un ouvrage sont amovibles de manière à pouvoir dissocier ladite station dudit ouvrage en cas de maintenance.

8. Station selon la revendication 7, **caractérisée en ce que** lesdits moyens de fixation amovible comprennent des moyens aimantés de manière à permettre la fixation de ladite station sur un ouvrage à structure métallique.

9. Système de surveillance hydrologique d'un cours d'eau comprenant :

   - une pluralité de stations hydrologiques (20) selon l'une des revendications 1 à 8 fixées sur des ouvrages surplombant le cours d'eau à surveiller,
   - un serveur de réception et de traitement des données de surveillance élaborées par chaque unité de traitement de chaque station hydrologique,
   - un module de notification configuré pour émettre un signal de notification à destination d'un dispositif externe dès que ledit serveur détermine une hauteur d'eau et/ou une vitesse supérieure ou inférieure à un seuil prédéterminé nécessitant une prise de décision d'un utilisateur.

10. Procédé de surveillance hydrologique d'un cours d'eau (11) comprenant les étapes suivantes :

    - mesurer au moyen d'un lidar (23) la distance, selon une direction verticale, qui sépare un boitier (21) logeant ce lidar et ce cours d'eau (11), ledit boitier étant fixé sur un ouvrage surplombant ledit cours d'eau,
    - acquérir au moyen d'une caméra (24) numérique logée dans ledit boitier (21) et orientée verticalement vers le cours d'eau à surveiller, des images dudit cours d'eau,
    - déterminer la hauteur d'eau à l'aplomb de l'ouvrage sur lequel le boitier est fixé et la vitesse de surface dudit cours d'eau, à partir de ladite mesure de distance fournie par ledit lidar (23), desdites images acquises par ladite caméra (24), et des caractéristiques optiques de ladite caméra,
    - transmettre à un serveur distant (40) des données de surveillance élaborées à partir de ladite hauteur d'eau et de ladite vitesse de surface calculée.

11. Procédé selon la revendication 10, **caractérisée en ce que** ladite étape consistant à déterminer la hauteur et la vitesse du cours d'eau comprend :

- un calcul du champ de vision v observé sur l'eau par ladite caméra, exprimé en mètres, à partir de la taille t du capteur de ladite caméra, de la focale f de ladite caméra, et de la distance *d* mesurée par ledit lidar suivant la formule

$$v = \frac{t}{f} . d \, ,$$

- un calcul de la vitesse de surface *vit* du cours d'eau à surveiller, exprimée en pixels par seconde, à partir desdites images acquises par ladite caméra,
- une conversion de la vitesse de surface du cours d'eau en mètres par seconde à partir de ladite vitesse *vit* calculée et du champ de vision v calculée.

12. Procédé selon la revendication 11, **caractérisée en ce que** le calcul de la vitesse de surface *vit* du cours d'eau à surveiller met en œuvre l'algorithme de Farnebäck.

**Patentansprüche**

1. Hydrologische Überwachungsstation (20) für einen Wasserlauf (11), welche umfasst:

- ein Gehäuse (21), das mit Befestigungsmitteln (22) für ein Bauwerk ausgestattet ist, das den zu überwachenden Wasserlauf überspannt, wie beispielsweise eine Brücke,
- ein Lidar (23), das in dem Gehäuse untergebracht ist und vertikal auf den zu überwachenden Wasserlauf (11) ausgerichtet ist, sobald das Gehäuse (21) an dem Bauwerk befestigt ist, um eine Entfernungsmessung zwischen dem zu überwachenden Wasserlauf und der Station durchführen zu können,
- eine Digitalkamera (24), die in dem Gehäuse (21) untergebracht ist und vertikal auf den zu überwachenden Wasserlauf (11) ausgerichtet ist, sobald das Gehäuse an dem Bauwerk befestigt ist, um Bilder des zu überwachenden Wasserlaufs aufnehmen zu können,
- eine Verarbeitungseinheit (25), die in dem Gehäuse (21) untergebracht und konfiguriert ist, die Wasserhöhe senkrecht zu dem Bauwerk, an dem die Station befestigt ist, und die Oberflächengeschwindigkeit des Wasserlaufs anhand der von dem Lidar (23), den von der Kamera (24) aufgenommenen Bildern und den optischen Eigenschaften der Kamera zu bestimmen;
- drahtlose Kommunikationsmittel (27) zu einem entfernten Server (40) der von der Verarbeitungseinheit (25) anhand der Wasserhöhe und der berechneten Oberflächengeschwindigkeit erstellten Überwachungsdaten,
- eine wiederaufladbare Batterie (26), die in dem Gehäuse (21) untergebracht ist, um die Verarbeitungseinheit, das Lidar, die Kamera und die drahtlosen Kommunikationsmittel mit Strom zu versorgen.

2. Station nach Anspruch 1, **dadurch gekennzeichnet, dass** die Verarbeitungseinheit (25) umfasst:

- ein Berechnungsmodul des von der Kamera (24) auf dem Wasser beobachteten Sichtfeldes (25a), das ausgedrückt wird in Metern, ausgehend von der Größe t des Kamerasensors, der Brennweite f der Kamera und der von dem Lidar gemessenen Entfernung d gemäß der Formel v = t /f·d,
- ein Berechnungsmodul der Oberflächengeschwindigkeit (25b) v des zu überwachenden Wasserlaufs, ausgedrückt in Pixeln pro Sekunde, ausgehend von den von der Kamera aufgenommenen Bildern,
- ein Modul (25c) zur Umrechnung der Oberflächengeschwindigkeit des Wasserlaufs in Meter pro Sekunde anhand der vom Geschwindigkeitsberechnungsmodul berechneten Geschwindigkeit und des vom Sichtfeldberechnungsmodul berechneten Sichtfelds v.

3. Station nach Anspruch 2, **dadurch gekennzeichnet, dass** das Berechnungsmodul der Oberflächengeschwindigkeit (25b) des zu überwachenden Wasserlaufs den Farnebäck-Algorithmus verwendet.

4. Station gemäß einem der Ansprüche 1 bis 3, **dadurch gekennzeichnet, dass** diese mindestens zwei Betriebsmodi umfasst, darunter:

- einen sogenannten Routine-Betriebsmodus, in dem die Messungen der Wasserhöhe und der Oberflächengeschwindigkeit berechnet und mit einer ersten vorbestimmten Frequenz an den entfernten Server gesendet werden,
- einen sogenannten Intensiv-Betriebsmodus, in dem die genannten Messungen der Wasserhöhe und der Oberflächengeschwindigkeit berechnet und mit einer zweiten vorbestimmten Frequenz, die höher ist als die genannte erste vorbestimmte Frequenz, an den entfernten Server gesendet werden.

5. Station nach Anspruch 4, **dadurch gekennzeichnet, dass** diese vom Routinemodus in den Intensivmodus wechselt, sobald die gemessene Wasserhöhe und/oder Oberflächengeschwindigkeit einen vorbestimmten Wert überschreitet.

6. Station nach einem der Ansprüche 1 bis 5, **dadurch gekennzeichnet, dass** diese zudem ein Solarpanel (15) umfasst, das mit der wiederaufladbaren Batterie (26) verbunden ist, um diese mit elektrischer Energie zu versorgen.

7. Station nach einem der Ansprüche 1 bis 6, **dadurch gekennzeichnet, dass** die Befestigungsmittel (22) des Gehäuses an einem Bauwerk abnehmbar sind, so dass die Station im Falle einer Wartung von dem Bauwerk entfernt werden kann.

8. Station gemäß Anspruch 7, **dadurch gekennzeichnet, dass** die abnehmbaren Befestigungsmittel Magnetmittel umfassen, um die Befestigung der Station an einem Bauwerk mit Metallstruktur zu ermöglichen.

9. System zur hydrologischen Überwachung eines Wasserlaufs, welches umfasst:

    - mehrere hydrologische Stationen (20) gemäß einem der Ansprüche 1 bis 8, die an Bauwerken befestigt sind, die den zu überwachenden Wasserlauf überragen,
    - einen Server zum Empfang und zur Verarbeitung der von jeder Verarbeitungseinheit jeder hydrologischen Station erstellten Überwachungsdaten,
    - ein Benachrichtigungsmodul, das konfiguriert ist, ein Benachrichtigungssignal an ein externes Gerät zu senden, sobald der Server eine Wasserhöhe und/oder Geschwindigkeit feststellt, die über oder unter einem vorgegebenen Schwellenwert liegt und eine Entscheidung des Benutzers erfordert.

10. Verfahren zur hydrologischen Überwachung eines Wasserlaufs (11), welches die Schritte umfasst:

    - Erfassen der vertikalen Entfernung zwischen einem Gehäuse (21), in dem sich ein Lidar (23) befindet, und dem Wasserlauf (11) durch das Lidar, worin das Gehäuse an einem Bauwerk befestigt ist, das den Wasserlauf überragt,
    - Aufnehmen von Bildern des Wasserlaufs durch eine in dem Gehäuse (21) untergebrachten und vertikal auf den zu überwachenden Wasserlauf ausgerichteten Digitalkamera (24),
    - Bestimmen der Wasserhöhe senkrecht über dem Bauwerk, an dem das Gehäuse befestigt ist, und der Oberflächengeschwindigkeit des Wasserlaufs anhand der von dem Lidar (23) gelieferten Entfernungsmessung, der von der Kamera (24) aufgenommenen Bilder und der optischen Eigenschaften der Kamera,
    - Übertragung der aus der Wasserhöhe und der berechneten Oberflächengeschwindigkeit erstellten Überwachungsdaten an einen entfernten Server (40).

11. Verfahren nach Anspruch 10, **dadurch gekennzeichnet, dass** der Schritt zum Bestimmen der Höhe und Geschwindigkeit des Wasserlaufs umfasst:

    - eine Berechnung des von der Kamera beobachteten Sichtfeldes v auf dem Wasser, ausgedrückt in Metern, ausgehend von der Größe $t$ des Kamerasensors, der Brennweite $f$ der Kamera und der von dem Lidar gemessenen Entfernung $d$ gemäß der Formel $v = t / f \cdot d$,
    - eine Berechnung der Oberflächengeschwindigkeit $vit$ des zu überwachenden Wasserlaufs, ausgedrückt in Pixeln pro Sekunde, ausgehend von den von der Kamera aufgenommenen Bildern,
    - eine Umrechnung der Oberflächengeschwindigkeit des Wasserlaufs in Meter pro Sekunde ausgehend von der berechneten Geschwindigkeit $vit$ und dem berechneten Sichtfeld v.

12. Verfahren nach Anspruch 11, **dadurch gekennzeichnet, dass** die Berechnung der Oberflächengeschwindigkeit $vit$ des zu überwachenden Wasserlaufs den Farnebäck-Algorithmus verwendet.

## Claims

1. Hydrological monitoring station (20) for monitoring a watercourse (11) comprising:

    - a housing (21) equipped with means (22) for fixing to a structure positioned over the watercourse to be monitored, such as a bridge,
    - a lidar device (23) housed in said housing and orientated vertically towards the watercourse (11) to be monitored, once the housing (21) is fixed to said structure, so as to be able to effect a measurement of distance between the watercourse to be monitored and said station,
    - a digital camera (24) housed in said housing (21) and orientated vertically towards the watercourse (11) to be monitored, once the housing is fixed to said structure, so as to be able to effect the acquisition of images of the watercourse to be monitored,
    - a processing unit (25) housed in said housing (21) and configured to be able to determine the level of water straight below the structure on which said station is fixed and the surface velocity of said watercourse, from said distance measurement provided by said lidar device (23), from said images acquired by said camera (24), and from the optical characteristics of said camera,
- means (27) for wirelessly communicating to a remover server (40) the monitoring data produced by said processing unit (25) from said water level and from said calculated surface velocity,
- a rechargeable battery (26), housed in said housing (21) so as to be able to supply electricity to said processing unit, said lidar device, said camera and said wireless communication means.

2. Station as claimed in claim 1, **characterised in that** said processing unit (25) comprises:

- a module (25a) for calculating the field of view v observed on the water by said camera (24), expressed in metres, from the size *t* of the sensor of said camera, from the focal length *f* of said camera and from the distance *d* measured by said lidar device according to the formula

$$v = \frac{t}{f}.d,$$

- a module (25b) for calculating the surface velocity *vit* of the watercourse to be monitored, expressed in pixels per second, from said images acquired by said camera,
- a module (25c) for converting the surface velocity of the watercourse in metres per second from said velocity *vit* calculated by said velocity-calculating module and from the field of view v calculated by said field of view-calculating module.

3. Station as claimed in claim 2, **characterised in that** said module (25b) for calculating the surface velocity *vit* of the watercourse to be monitored runs the Farnebäck algorithm.

4. Station as claimed in any one of claims 1 to 3, **characterised in that** it comprises at least two operating modes including:

- an operating mode, referred to as routine operating mode, in which said measurements of the water level and of the surface velocity are calculated and sent to said remote server at a first predetermined frequency,
- an operating mode, referred to as intensive operating mode, in which said measurements of the water level and of the surface velocity are calculated and sent to said remote server at a second predetermined frequency, higher than said first predetermined frequency.

5. Station as claimed in claim 4, **characterised in that** it toggles from the routine mode to the intensive mode when said water level and/or the surface velocity which have been measured exceed a predetermined value.

6. Station as claimed in any one of claims 1 to 5, **characterised in that** it further comprises a solar panel (15) connected to said rechargeable battery (26) so as to be able to supply it with electrical energy.

7. Station as claimed in any one of claims 1 to 6, **characterised in that** said means (22) for fixing the housing to a structure are detachable so as to be able to dissociate said station from said structure for maintenance.

8. Station as claimed in claim 7, **characterised in that** said detachable fixing means comprise means which are magnetised so as to enable the fixing of said station to a structure of metallic construction.

9. Hydrological monitoring system for monitoring a watercourse comprising:

- a plurality of hydrological stations (20) as claimed in any one of claims 1 to 8 fixed to structures positioned over the watercourse to be monitored,
- a server for reception and processing of the monitoring data produced by each processing unit of each hydrological station,
- a notification module configured to emit a notification signal to an external device when said server determines a water level and/or a velocity greater than or less than a predetermined threshold necessitating the user to make a decision.

10. Hydrological monitoring process for monitoring a watercourse (11) comprising the following steps:

- measuring by means of a lidar device (23) the distance, in a vertical direction, which separates a housing (21) housing this lidar device and this watercourse (11), said housing being fixed to a structure positioned over said watercourse,
- acquiring, by means of a digital camera (24) housed in said housing (21) and orientated vertically towards the watercourse to be monitored, images of said watercourse,
- determining the water level straight below the structure on which the housing is fixed and the surface velocity of said watercourse, from said distance measurement provided by said lidar device (23), from said images acquired by said camera (24), and from the optical characteristics of said camera,

- transmitting to a remote server (40) monitoring data produced from said water level and said calculated surface velocity.

11. Process as claimed in claim 10, **characterised in that** said step of determining the level and the velocity of the watercourse comprises:

- a calculation of the field of view *v* observed on the water by said camera, expressed in metres, from the size *t* of the sensor of said camera, from the focal length *f* of said camera, and from the distance *d* measured by said lidar device according to the formula $v = \frac{t}{f} \cdot d$,
- a calculation of the surface velocity *vit* of the watercourse to be monitored, expressed in pixels per second, from said images acquired by said camera,
- a conversion of the surface velocity of the watercourse in metres per second from said calculated velocity *vit* and from the calculated field of view *v*.

12. Process as claimed in claim 11, **characterised in that** the calculation of the surface velocity *vit* of the watercourse to be monitored uses the Farnebäck algorithm.

[Fig. 1]

[Fig. 2]

[Fig. 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2961702

- CN 112215903 A